# EUROPÄISCHE PATENTSCHRIFT

(11) **EP 1 363 490 B1**
(45) Veröffentlichungstag und Bekanntmachung des Hinweises auf die Patenterteilung: **13.08.2008**
(21) Anmeldenummer: 02715454.1
(22) Anmeldetag: 19.01.2002
(51) Int. Cl.: A01N 25/02, A01N 47/36, A01N 61/00

(54) **AGROCHEMISCHE FORMULIERUNGEN**
AGROCHEMICAL FORMULATIONS
FORMULATIONS AGROCHIMIQUES

(30) Priorität: 22.02.2001 DE 10108472
(43) Veröffentlichungstag der Anmeldung: 26.11.2003
(73) Patentinhaber: Bayer CropScience AG, 40789 Monheim (DE)
(72) Erfinder: MAIER, Thomas, 65719 Hofheim (DE); SCHNABEL, Gerhard, 63820 Elsenfeld (DE); HAASE, Detlev, 65929 Frankfurt (DE); WÜRTZ, Jochen, 55411 Bingen am Rhein (DE)
(86) Internationale Anmeldenummer: PCT/EP2002/000500
(87) Internationale Veröffentlichungsnummer: WO 2002/067676

(56) Entgegenhaltungen:
- EP-A- 0 113 857
- EP-A- 1 023 833
- WO-A-01/82693
- WO-A-01/97615
- WO-A-98/16102
- GB-A- 2 309 904
- US-A- 5 092 918
- DATABASE WPI Section Ch, Week 199837 Derwent Publications Ltd., London, GB; Class A97, AN 1998-433651 XP002202665 & JP 10 182302 A (TAKEDA CHEM IND LTD), 7. Juli 1998 (1998-07-07)
- PATENT ABSTRACTS OF JAPAN vol. 1999, no. 03, 31. März 1999 (1999-03-31) & JP 10 324606 A (NISSAN CHEM IND), 8. Dezember 1998 (1998-12-08)
- DATABASE WPI Section Ch, Week 200203 Derwent Publications Ltd., London, GB; Class A97, AN 1996-368033 XP002202666 & JP 03 237077 B (HOKKO CHEM IND CO LTD), 10. Dezember 2001 (2001-12-10)

## Beschreibung

Die vorliegende Erfindung betrifft das Gebiet der agrochemisch en Formulierungen, insbesondere der flüssigen Formulierungen von agrochemischen Wirkstoffen, z.B. Sulfonylharnstoffen und deren Salzen.

Bei Sulfonylharnstoffen handelt es sich um Substanzen, die in der Agrochemie überwiegend als Herbizide verwendet werden. Wegen ihrer niedrigen Aufwandmenge und ihrer im allgemeinen breiten Wirkungsspektren werden ALS-Inhibitoren für den Einsatz in allen wirtschaftlich wichtigen Kulturen eingesetzt.

Im allgemeinen werden agrochemische Wirkstoffe nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Prinzipiell können Wirkstoffe auf unterschiedliche Art formuliert werden, je nachdem welche biologischen und/oder chemisch-physikalischen Parameter vorgegeben sind. Allgemein kommen als Formulierungsmöglichkeiten dafür beispielsweise in Betracht: Spritzpulver (WP), Öl-in-Wasser- bzw. Wasser-in-Öl-Emulsionen (EW bzw. EO), Suspensionen (SC), Suspoemulsionen (SE), emulgierbare Konzentrate (EC), wässrige Lösungen (SL) oder auch Granulate zur Boden- oder Streuapplikation bzw. wasserdispergierbare Granulate (WG). Die genannten Formulierungstypen sind im Prinzip bekannt und werden z. B. beschrieben in: Winnacker-Küchler, "Chemische Technologie", Band 7, C.Hauser-Verlag, München, 4.Auflage 1986; van Valkenburg, "Pesticide Formulations", Marcel-Dekker N.Y., 1973; K.Martens, "Spray Drying Handbook", 3rd Ed., 1979, G.Goodwin Ltd. London.

Handelt es sich bei den zu formulierenden agrochemischen Wirkstoffen um solche, die im gelösten Zustand bzw. in flüssigen Medien allgemein zum chemischen Abbau neigen, werden zumeist feste Formulierungen wie benetzbare Pulver oder Granulate bevorzugt. Wie in US4599412 und US5731264 beschrieben, trifft dies beispielsweise auf herbizide Wirkstoffe aus der Gruppe der ALS-Inhibitoren zu, wie Metsulfuronmethyl, Nico- oder Rimsulfuron, Primisulfuronmethyl, Tria-, Pro-, Amido-oder Ethoxysulfuron. Entsprechend sind Pulverformulierungen bzw. Granulate dieser Herbizide - wie beispielsweise in WO9910857, WO9809516, WO9508265, US5441923, WO9423573, JP05017305, JP04297404, JP04297403 oder JP04066509 beschrieben - bereits bekannt.

Häufig wird beim Verdünnen derartiger Pulverformulierungen oder Granulate mit Wasser (zur Herstellung der Spritzbrühe) kein vollständiges Auflösen der im Konzentrat ungelösten Anteile erreicht, d. h. die Spritzbrühe ist eine Suspension des Konzentrates. Es ist jedoch stets von Vorteil, wenn Spritzbrühen so fein-dispers wie möglich vorliegen, da hierdurch die Verstopfungsgefahr für die Spritzdüsen und damit der Reinigungsaufwand allgemein vermindert wird. Außerdem sind Pulver-oder Granulatformulierungen nur mit relativ großem Energieeintrag und technisch aufwendigen Rührwerkzeugen herstellbar, d.h. bereits bei ihrer Herstellung ergeben sich erhebliche Nachteile.

Flüssige Suspensionen von Herbiziden der vorstehend beschriebenen Art sind in Form von Suspensionskonzentraten zwar bereits bekannt (FR2576181, EP0205348, EP0237292 oder EP0246984). Die Wirkstoffe liegen jedoch auch im Falle von Suspensionen im nicht gelösten Zustand vor, so daß bei der Applikation der Spritzbrühe ähnliche Probleme auftreten wie im Falle der Pulverformulierungen oder Granulate. Außerdem stellen Suspensionskonzentrate (SC) und Suspoemulsionen (SE) thermodynamisch instabile Formulierungen mit eingeschränkter physikalischer Lagerstabilität dar.

Tensidfreie wässrige Lösungen von Sulfonylharnstoffen sind in US4683000, US4671817 und EP0245058 beschrieben, wasserfreie emulgierbare Konzentrate sind in den Schriften DE3422824, US4632693, WO9608148 und US5597778 beschrieben. In keiner dieser Schriften sind Hinweise zur Erhöhung zur Lagerstabilität der Formulierungen enthalten. Emulgierbare Konzentrate von Sulfonylharnstoffen sind zudem beschrieben in WO 01/97615.

Es bestand somit die Aufgabe eine gegenüber Abbau stabile agrochemische Formulierung zur Verfügung zu stellen, die günstige anwendungstechnische Eigenschaften aufweist.

Überraschenderweise wurde nun gefunden, daß diese Aufgabe gelöst wird durch bestimmte flüssige Wirkstoff-Formulierungen, die Polycarbonsäureester der Formel (I) sowie als agrochemische Wirkstoffe Sulfonylharnstoffe und/oder deren Salze enthalten.

Gegenstand der vorliegenden Erfindung ist daher eine flüssige Formulierung (Zubereitung), enthaltend
a) eine oder mehrere Verbindungen der Formel (I)

   R^{γ}-O-OC-(CR^{α}R^{β})ₓ-CO-O-R^{δ} (I)

   worin
   R^{α} und R^{β} gleich oder verschieden H, ein unsubstituierter oder substituierter C₁-C₂₀-Kohlenwasserstoffrest wie C₁-C₁₀-Alkyl oder eine Gruppe (CR'R")_{y}-CO-OR'" sind, worin R' und R" gleich oder verschieden H oder ein unsubstituierter oder substituierter C₁-C₂₀-Kohlenwasserstoffrest wie C₁-C₁₀-Alkyl sind, y eine ganze Zahl von 0 bis 10 ist und R"' ein unsubstituierter oder substituierter C₁-C₂₀-Kohlenwasserstoffrest wie C₁-C₁₀ Alkyl ist, R^{γ} und R^{δ} gleich oder verschieden ein unsubstituierter oder substituierter C₁-C₂₀-Kohlenwasserstoffrest wie C₁-C₁₀ Alkyl ist, und x eine ganze Zahl von 0 bis 20 ist, und
b) einen oder mehrere agrochemische Wirkstoffe aus der Gruppe der Sulfonylharnstoffe und/oder deren Salze, z.B. Salze mit organischen Kationen auf Stickstoff-, Schwefel- oder Phosphor-Basis und/oder anorganischen Kationen wie Metallkationen, wobei zumindest einer der Wirkstoffe in gelöster Form vorliegt, ausgenommen emulgierbare Konzentrate, bestehend aus
   A) einem oder mehreren Sulfonylharnstoffen der allgemeinen Formel (I) und/oder deren Salzen 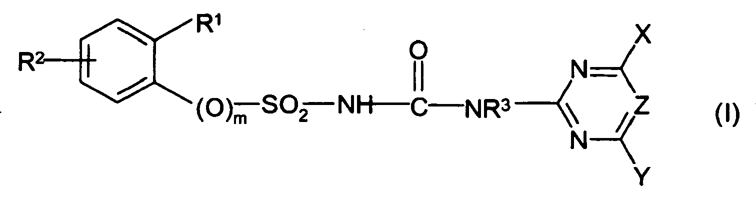 worin
      - R¹: C₂-C₄-Alkoxy oder CO-R^{a} ist, worin R^{a} gleich OH, C₁-C₆-Alkoxy oder NR^{b}R^{c} ist, worin R^{b} und R^{c} unabhängig voneinander gleich oder verschieden H oder C₁-C₆-Alkyl sind,
      - R²: Halogen oder (A)ₙ-NR^{d}R^{e} ist, worin n gleich Null oder 1 ist. A eine Gruppe CR^{f}R^{g} ist, worin R^{f} und R^{g} unabhängig voneinander gleich oder verschieden H oder C₁-C₆-Alkyl sind, R^{d} gleich H oder C₁-C₆-Alkyl ist und R^{e} H, C₁C₆-Alkyl oder ein Acyl-Rest ist, wobei R^{d} und R^{e} auch einen heterocyclischen Ring bilden können, und für den Fall, daß R¹ gleich C₂-C₄-Alkoxy ist, R² auch H sein kann.
      - R³: H oder C₁-C₆-Alkly ist,
      - m: gleich Null oder 1 ist.
      - X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy
      - Z: gleich CH oder N ist.
   B) einem oder mehreren Tensiden, enthaltend als Strukturelement mindestens 10 Alkylenoxideinheiten,
   C) Malonsäuredimethylester, Bernsteinsäuredimethylester, Glutarsäurediemethylester oder Adipinsäuredimethylester, und
   einem oder mehreren von Tensid B) verschiedene Tensiden ionischer und/oder nichtionischer Art.
   Die flüssigen Formulierungen der vorliegenden Erfindung sind vorzugsweise herbizide Formulierungen, beispielsweise in Form von Emulsionskonzentraten. Die Formulierungen enthalten bevorzugt zumindest einen der Wirkstoffe aus der Gruppe der ALS-Inhibitoren in gelöster Form, wobei die Polycarbonsäurealkylester a) als Lösungsmittel dienen. Außerdem bevorzugt sind Formulierungen, die nur einen Polycarbonsäurealkylester a) enthalten.
   Die flüssigen Formulierungen der vorliegenden Erfindung können gegebenenfalls neben den Komponenten a) und b) noch einen oder mehrere Hilfs- und Zusatzstoffe als weitere Komponenten enthalten, z.B.:
(c) Tenside und/oder nicht-tensidische Polymere,
(d) von Komponente a) verschiedene organische Lösungsmittel,
(e) von ALS-Inhibitoren verschiedene Agrochemikalien wie Herbizide, Insektizide, Fungizide, Safener, Wachstumsregulatoren oder Düngemittel,
(f) übliche Formulierungshilfsmittel wie Entschäumer, Frostschutzmittel, Verdunstungshemmer, Konservierungsmittel, Riechstoffe, Farbstoffe, Stabilisatoren, Wasserfänger oder Verdicker,
(g) Tankmischkomponenten, und/oder
(h) zusätzliches Wasser.

Die in den erfindungsgemäßen Formulierungen als Komponente a) enthaltenen Polycarbonsäurealkylesten der formel(I) können als Lösungsmittel wirken und sind z. B. Alkylester niedermolekularer di-, tri-, tetra- oder auch höherfunktioneller Carbonsäuren, vorzugsweise mit 2-20 C-Atomen in Frage. Ebenso kommen polymere Polycarbonsäuren, vorzugsweise mit Molekulargewichten bis 2000 g/mol in Frage. Beispiele für Polycarbonsäuren sind Oxal-, Malon-, Bernstein-, Glutar-, Adipin-, Pimelin-, Sebacin-, Azelain-, Suberin-, Malein-, Phthal-, Terephthal-, Mellit-, Trimellit-, Polymalein-, Polyacryl- und Polymethacrylsäure sowie Co- bzw. Terpolymere, die Malein-, Acryl- und/oder Methacrylsäureeinheiten enthalten.

Als Alkoholkomponente der Polycarbonsäurealkylester a) kommen z.B. Alkylalkohole, vorzugsweise monofunktionelle Alkylalkohole mit 1-20 C-Atomen in Frage. Beispiele solcher Alkylalkohole sind Methyl-, Ethyl-, n-Propyl-, iso-Propyl-, n-Butyl-, sec.-Butyl-, iso-Butyl- oder tert-Butylalkohol.

Die Polycarbonsäurealkylester a) weisen die nachfolgende Formel (I) auf,

R^{Y}-O-OC-(CR^{α}R^{β})ₓ-CO-O-R^{δ} (I)

worin
- R^{α} und R^{β}: gleich oder verschieden H, ein unsubstituierter oder substituierter C₁-C₂₀-Kohlenwasserstoffrest wie C₁-C₁₀-Alkyl oder eine Gruppe (CR'R")_{y}-CO-OR'" sind, worin R' und R" gleich oder verschieden H oder ein unsubstituierter oder substituierter C₁-C₂₀-Kohlenwasserstoffrest wie C₁-C₁₀-Alkyl sind, y eine ganze Zahl von 0 bis 10 ist und R"' ein unsubstituierter oder substituierter C₁-C₂₀-Kohlenwasserstoffrest wie C₁-C₁₀ Alkyl ist,
- R^{γ} und R^{δ}: gleich oder verschieden ein unsubstituierter oder substituierter C₁-C₂₀-Kohlenwasserstoffrest wie C₁-C₁₀ Alkyl ist, und x eine ganze Zahl von 0 bis 20 ist.

Besonders bevorzugte Polycarbonsäurealkylester a) sind Diester der nachstehenden Formel (la)

R^{γ}-O-OC-(CH₂)ₓ-CO-O-R^{δ} (Ia)

worin
- x: eine ganze Zahl von 0 bis 20 ist, und
- R^{Y} und R^{δ}: unabhängig voneinander gleich oder verschieden C₁-C₆- Alkyl sind.

Beispiele für Polycarbonsäurealkylester a) sind Oxalsäureester wie Oxalsäure-dimethylester, Oxalsäure-diethylester, Oxalsäure-di-n-propylester, Oxalsäure-di-isopropylester und Oxalsäure-methylethylester, Malonsäureester wie Malonsäure-dimethylester, Malonsäure-diethylester, Malonsäure-di-n-propylester, Malonsäure-di-isopropylester und Malonsäure-methylethylester, Bernsteinsäureester wie Bernsteinsäure-dimethylester, Bernsteinsäure-diethylester, Bernsteinsäure-di-n-propylester, Bernsteinsäure-di-isopropylester und Bernsteinsäure-methylethylester, Glutarsäureester wie Glutarsäure-dimethylester, Glutarsäure-diethylester, Glutarsäure-di-n-propylester, Glutarsäure-di-isopropylester und Glutarsäure-methylethylester, und Adipinsäureester wie Adipinsäure-dimethylester, Adipinsäure-diethylester, Adipinsäure-di-n-propylester, Adipinsäure-di-isopropylester und Adipinsäure-methylethylester. Bevorzugt sind Adipinsäureester, insbesondere Adipinsäure-dimethylester.

Die Polycarbonsäurealkylester a) sind beispielsweise durch Umsetzung der freien Carbonsäuren mit den Alkoholen zugänglich, wobei die Ester z.B. durch Umsetzung "aktivierter" Polycarbonsäuren wie Polycarbonsäure-Anhydriden oder Polycarbonsäure(poly)chloriden mit den Alkoholen nach bekannten Veresterungsmethoden erhalten werden können.

Bei den in den erfindungsgemäßen Formulierungen als Komponente b) enthaltenen Wirkstoffen aus der Gruppe der Sulfonylharnstoffe handelt es sich besonders bevorzugt solche mit der allgemeinen Formel (II) und/oder deren Salze:

R^{a}-SO₂-NR^{b}-CO-(NR^{c})ₓ - R^{d} (II)

worin
- R^{a}: ein Kohlenwasserstoffrest, vorzugsweise ein Arylrest wie Phenyl, der unsubstituiert oder substituiert ist, oder ein heterocyclischer Rest, vorzugsweise ein Heteroarylrest wie Pyridyl, der unsubstituiert oder substituiert ist, und wobei die Reste inklusive Substituenten 1-30 C-Atome, vorzugsweise 1-20 C-Atome aufweisen, oder R^{a} eine elektronenziehende Gruppe wie ein Sulfonamidrest ist,
- R^{b}: ein Wasserstoffatom oder ein Kohlenwasserstoffrest ist, der unsubstituiert oder substituiert ist und inklusive Substituenten 1-10 C-Atome aufweist, z.B. unsubstitiertes oder substituiertes C₁-C₆-Alkyl, vorzugsweise ein Wasserstoffatom oder Methyl,
- R^{c}: ein Wasserstoffatom oder ein Kohlenwasserstoffrest ist, der unsubstituiert oder substituiert ist und inklusive Substituenten 1-10 C-Atome aufweist, z.B. unsubstitiertes oder substituiertes C₁-C₆-Alkyl, vorzugsweise ein Wasserstoffatom oder Methyl,
- x: gleich Null oder 1 ist, und
- R^{d}: ein Heterocyclylrest ist
.

Ein Kohlenwasserstoffrest im Sinne dieser Beschreibung ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Wenn nicht anders angegeben, weist ein Kohlenwasserstoffrest bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl. Ein Kohlenwasserstoffoxyrest ist ein Kohlenwasserstoffrest, der wie vorstehend definiert ist und über ein Sauerstoffatom gebunden ist.

Ein heterocyclischer Rest oder Ring (Heterocyclyl) im Sinne dieser Beschreibung kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi-oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rost wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste im Sinne dieser Beschreibung, wie substituierte Kohlenwasserstoffreste, z.B. substituiertes Alkyl, Alkenyl, Alkinyl oder Aryl wie Phenyl und Benzyl, oder substituiertes Heterocyclyl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen (Fluor, Chlor, Brom, Jod), Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano.

Im Sinne dieser Beschreibung können die aliphatischen Reste wie Alkyl-, Alkoxy-, Haloalkyl-, Alkylamino- und Alkylthioreste sowie die entsprechenden ungesättigten und/oder substituierten Reste im Kohlenstoffgerüst jeweils geradkettig oder verzweigt oder für Kohlenstoffanzahlen ab 3 auch cyclisch sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt.

Alkylreste, auch in den zusammengesetzten Bedeutungen wie Alkoxy, Haloalkyl usw., bedeuten z.B. Methyl, Ethyl, n-, i- oder Cyclo-Propyl, n-, i-, t-, 2- oder CycloButyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Unter den in den erfindungsgemäßen flüssigen Formulierungen als Komponente b) enthaltenen Wirkstoffen aus der Gruppe der Sulfonylharnstoffe sind im Sinne der vorliegenden Erfindung neben den neutralen Verbindungen stets auch deren für die Landwirtschaft geeigneten Salze mit anorganischen und/oder organischen Gegenionen zu verstehen.

Die Sulfonylharnstoffe, z.B. der Formel (II), können beispielsweise Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium-und Kaliumsalze, oder auch Ammonium-, Sulfonium- oder Phophoniumsalze. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Als Salze mit anorganischen Gegenionen eignen sich z.B. Salze mit NH₄^{⊕}, SH₃^{⊕} oder PH₄^{⊕}-Gegenionen oder Metallsalze z.B. mit Alkali- oder Erdalkalimetall-Gegenionen wie Na^{⊕}, K^{⊕}, ½Mg^{2⊕} oder ½Ca^{2⊕}. Als Salze mit organischen Gegenionen eignen sich z.B. organische Ammonium-, Sulfonium- und Phosphoniumsalze. Bevorzugt sind organische Gegenionen der Formel [NR⁸R⁹R¹⁰R¹¹]⁺, [SR¹²R¹³R¹⁴]⁺ oder [PR¹⁵R¹⁶R¹⁷R¹⁸]⁺, oder ein quarterniertes Pyridiniumion [Py-R¹⁹]⁺, wobei R⁸ bis R¹⁹ unabhängig voneinander gleich oder verschieden H oder ein unsubstituierter oder substituierter Kohlenwasserstoffrest wie substituiertes oder unsubstituiertes (C₁-C₃₀)-Alkyl, substituiertes oder unsubstituiertes (C₁-C₁₀)-AlkylAryl, substituiertes oder unsubstituiertes (C₃-C₃₀)-(Oligo)-Alkenyl, substituiertes oder unsubstituiertes (C₃-C₁₀)-(Oligo)-Alkenyl-Aryl, substituiertes oder unsubstituiertes (C₃-C₃₀)-(Oligo)-Alkinyl, substituiertes oder unsubstituiertes (C₃-C₁₀)-(Oligo)-Alkinyl, Aryl oder substituiertes oder unsubstituiertes Aryl sind, oder ein unsubstituierter oder substituierter Heterocyclylrest, insbesondere Heteroarylrest sind wie substituiertes oder unsubstituiertes (C₁-C₁₀)-Alkyl-Hetero-Aryl, substituiertes oder unsubstituiertes (C₃-C₁₀)-(oligo)-Alkenyl-Hetero-Aryl, substituiertes oder unsubstituiertes. (C₃-C₁₀)-(Oligo)-Alkinyl-Hetero-Aryl oder substituiertes oder unsubstituiertes Hetero-Aryl, oder zwei Reste R⁸/R⁹, R¹⁰/R¹¹, R¹²/R¹³, R¹⁵/R¹⁶ und R¹⁷/R¹⁸ zusammen einen unsubstituierten oder substituierten Ring bilden können, wobei zumindest einer der Reste R⁸-R¹¹, zumindest einer der Reste R¹²-R¹⁴ und zumindest einer der Reste R¹⁵-R¹⁸ von H verschieden ist.

Bevorzugte Sulfonylharnstoffe sind z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulforiyl)-alkylamino-Teil sind Alkyl, Alkoxy, Halogen, Amino, Alkylamino, Dialkylamino, Acylamino, Acylaminomethyl, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, (Alkansulfonyl)alkylamino. Solche geeigneten Sulfonylharnstoffe sind beispielsweise
b1) Phenyl- und Benzylsulfonylharnstoffe und verwandte Verbindungen, z.B. 1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harn-stoff (Triasulfuron),
   1-(2-Methoxycarbonylphenylsulfonyl)-3-(4,6-dimethylpyrimidin-2-yl)hamstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimid in-2-yl)-hamstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)hamstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Salze wie das Natriumsalz, WO 92/13845),
   DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl und dessen Salze wie das Natriumsalz, WO 95/10507),
   N,N-Dimethyl-2-[3-(4,6-dimethoxypyrimidin-2-yl)ureidosulfonyl]-4-formylamino-benzamid (Foramsulfuron und dessen Salze wie das Natriumsalz, WO 95/01344);
b2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
b3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. 'Weeds' 1995, S. 65);
b4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
b5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
      Pyridylsulfonylharnstoffe, wie sie z.B. in DE-A 40 00 503 und DE-A 40 30 577 beschrieben sind, vorzugsweise solche der Formel 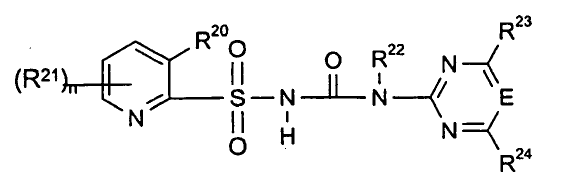 worin
      - E: CH oder N, vorzugsweise CH,
      - R²⁰: Jod oder NR²⁵R²⁶,
      - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
      - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄ , -(CH₂)₅- oder -(CH₂)₂-O-(CH₂)₂-,
      - n: 0,1,2 oder 3, vorzugsweise 0 oder 1 ist,
      - R²²: Wasserstoff oder CH₃,
      - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
      - R²⁴: (C₁-C₂)-Alkyl, (C₁-C₂)-Halogenalkoxy, vorzugsweise OCHF₂, oder (C₁-C₂)-Alkoxy,
      - R²⁵: (C₁-C₄)-Alkyl,
      - R²⁶: (C₁-C₄)-Alkylsulfonyl oder
      - R²⁵ und R²⁶: gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methyl-aminopyridin-2-yl)-sulfonylharnstoff, oder deren Salze;
b6) Alkoxyphenoxysulfonylharnstoffe, wie sie z.B. in EP-A 0 342 569 beschrieben sind, vorzugsweise solche der Formel 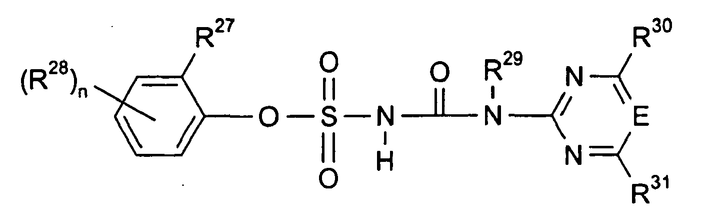 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)Alkoxy)-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff, oder deren Salze;
b7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus;

Typische Vertreter dieser Wirkstoffe sind unter anderem die nachfolgend aufgeführten Verbindungen: Amidosulfuron, Azimsulfuron, Bensulfuron-methyl, Chlorimuron-Ethyl, Chlorsulfuron, Cinosulfuron, Cyclosulfamuron, Ethametsulfuronmethyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Salze wie das Natriumsalz (WO 92/13845), Mesosulfuron-Methyl und dessen Salze wie das Natriumsalz (Agrow Nr. 347, 3. März 2000, Seite 22 (PJB Publications Ltd. 2000)) und Foramsulfuron und dessen Salze wie das Natriumsalz (Agrow Nr. 338, 15. Oktober 1999, Seite 26 (PJB Publications Ltd. 2000)).

Die vorstehend aufgeführten Wirkstoffe sind z.B. bekannt aus The Pesticide Manual, 12. Auflage (1999), The British Crop Protection Council oder den nach den einzelnen Wirkstoffen aufgeführten Literaturstellen.

Bevorzugte Kombinationen von Polycarbonsäurealkylestern a) und sulfonylharnstoffen b) sind solche bei denen die als bevorzugt angegebenen Komponenten a) und b) kombiniert sind. Besonders bevorzugte Kombinationen von Polycarbonsäurealkylestern a) und sulfonylharnstoffen b) sind Kombinationen von Amidosulfuron mit einem oder mehreren, vorzugsweise einem Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester, Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester, von Ethoxysulfuron mit einem oder mehreren, vorzugsweise einem Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester, Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester, von lodosulfuron-methyl und/oder dessen Natriumsalz mit einem oder mehreren, vorzugsweise einem Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester, Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester, von Foramsulfuron und/oder dessen Natriumsalz mit einem oder mehreren, vorzugsweise einem Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester; Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester, und von Mesosulfuron-methyl und/oder dessen Natriumsalz mit einem oder mehreren, vorzugsweise einem Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester, Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester.

Die erfindungsgemäßen flüssigen Formulierungen enthalten in einer weiteren bevorzugten Ausführungsform als Komponente a) einen oder mehrere, vorzugsweise einen Polycarbonsäurealkylester, ausgewählt aus der Gruppe bestehend aus Oxalsäure-dimethylester, Oxalsäure-diethylester, Oxalsäure-di-n-propylester, Oxalsäure-di-isopropylester, Oxalsäure-methylethylester, Malonsäure-dimethylester, Malonsäure-diethylester, Malonsäure-di-n-propylester, Malonsäure-di-isopropylester, Malonsäure-methylethylester, Bernsteinsäure-dimethylester, Bernsteinsäure-diethylester, Bernsteinsäure-di-n-propylester, Bernsteinsäure-di-isopropylester, Bernsteinsäure-methylethylester, Glutarsäure-dimethylester, Glutarsäure-diethylester, Glutarsäure-di-n-propylester, Glutarsäure-di-isopropylester, Glutarsäure-methylethylester, Adipinsäure-dimethylester, Adipinsäure-diethylester, Adipinsäure-di-n-propylester, Adipinsäure-di-isopropylester und Adipinsäure-methylethylester, vorzugsweise Adipinsäure-dimethylester, und als Komponente b) Mischungen von zwei oder mehr Sulfonylharnstoffen, z.B. Amidosulfuron/lodosulfuron-methyl, Amidosulfuron/lodosulfuron-methyl-Natrium, Foramsulfuron/lodosulfuron-methyl, Foramsulfuron/lodosulfuron-methyl-Natrium, Foramsulfuron-Natrium/lodosulfuron-methyl, Foramsulfuron-Natrium/lodosulfuron-methyl-Natrium, Mesosulfuron-methyl/lodosulfuron-methyl, Mesosulfuron-methyl/lodosulfuron-methyl-Natrium, Mesosulfuron-methyl-Natrium/lodosulfuron-methyl und Mesosulfuron-methyl-Natrium/lodosulfuron-methyl-Natrium. Die Formulierungen können auch Safener enthalten, z.B. Mefenpyr-diethyl, Isoxadifen-ethyl oder Cloquintocet-mexyl.

Die flüssigen Formulierungen der vorliegenden Erfindung können gegebenenfalls neben den Komponenten a) und b) noch einen oder mehrere Hilfs- und Zusatzstoffe als weitere Komponenten enthalten, z.B.:
(c) Tenside wie Dispergatoren und Emulgatoren und/oder nicht-tensidische Polymere,
(d) von Komponente a) verschiedene organische Lösungsmittel,
(e) von ALS-Inhibitoren verschiedene Agrochemikalien wie Herbizide, Insektizide, Fungizide, Säfener, Wachstumsregulatoren oder Düngemittel,
(f) übliche Formulierungshilfsmittel wie Entschäumer, Frostschutzmittel, Verdunstungshemmer, Konservierungsmittel, Riechstoffe, Farbstoffe, Stabilisatoren, Wasserfänger oder Verdicker,
(g) Tankmischkomponenten, und/oder
(h) zusätzliches Wasser.

So können in den flüssigen Formulierungen der vorliegenden Erfindung als Komponente c) beispielsweise eines oder mehrere Tenside, z.B. ionogene, nichtionogene oder betainische Tenside enthalten sein. Diese können monomerer oder polymerer Natur (z.B. Graft-Polymere) sein. Beispiele für Komponenten c) sind Tenside auf Silikon-Basis wie Trisiloxantenside, Derivate von Polydimethylsiloxanen und/oder Silikonöle oder zuckerbasierte Tenside wie Atplus® 309 F (Uniqema). Weitere Beispiele für Komponenten c) sind (C₄-C₃₀) (Poly) Alkylenoxidaddukte, die z.B. verzweigt, linear, gesättigt oder ungesättigt sein können, insbesondere von Fettalkoholen und/oder Fettsäuren bzw. Fettsäureestern. Beispiele für (Poly) Alkylenoxidaddukte sind Soprophor® CY8 (Rhodia), Genapol® X-060, Genapol® X-080, Genapol® X-150; Genapol® X-200, Sapogenat T® 300, Sapogenat T® 500, Genapol® T 200, Genapol T® 800, oder Genagen® MEE (Methylesterethoxylate, Clariant) und andere endgruppenverschlossene Tenside mit einer Methyl-, Ethyl-, n-Propyl-, i-Propyl-, n-Butyl, tert-Butyl, i-Butyl, sec-Butyl oder Acetyl-Gruppe als Endgruppierung, z.B. Genapol® X-060-Methylether oder Genapol® X-150-Methylether.

Weitere Beispiele für Komponenten c) sind in der kontinuierlichen Phase der Formulierung unlösliche Komponenten, beispielsweise anionogene Tenside wie Hostapur® OSB (Clariant), Netzer® IS (Clariant), Galoryl® DT 201 (CFPI), Tamol® (BASF) oder Morwet® D 425 (Witco) eingesetzt werden. Durch Einarbeitung von in der kontinuierlichen Phase unlöslichen Komponenten oder auch unlöslicher Wirkstoffe in die Formulierungen ergeben sich Dispersionen. Daher umfaßt die vorliegende Erfindung auch Dispersionen.

Als Komponente c) können auch Sulfosuccinate, z.B. der Formel (III) enthalten sein, 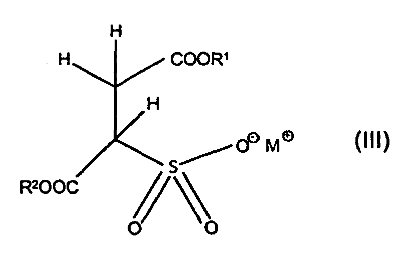 worin
- R¹,R²: unabhängig voneinander gleich oder verschieden ein unsubstituierter oder substituierter C₁-C₃₀-Kohlenwasserstoffrest wie C₁-C₃₀-Alkyl, oder ein (Poly) Alkylenoxidaddukt bedeuten und
- M^{⊕}: ein Kation ist, z.B. ein Metallkation wie ein Alkali- oder Erdalkalimetallkation, ein Ammoniumkation wie NH₄, Alkyl-, Alkylaryl-oder Poly(arylalkyl)phenyl-ammoniumkation oder deren (Poly) Alkylenoxidaddukte, oder ein aminoterminiertes (Poly) Alkylenoxidaddukt ist.

(Poly)alkylenoxidaddukte im Sinne dieser Beschreibung sind Umsetzungsprodukte von alkoxylierbaren Ausgangsmaterialien wie Alkoholen, Aminen, Carbonsäuren wie Fettsäuren, hydroxy- oder aminofunktionellen Carbonsäureestern (beispielsweise Triglyceriden auf Ricinusölbasis) oder Carbonsäureamiden mit Alkylenoxiden, wobei die (Poly)alkylenoxidaddukte mindestens eine Alkylenoxid-Einheit aufweisen, im allgemeinen aber polymer sind, d.h. 2-200, vorzugsweise 5-150 Alkylenoxid-Einheiten aufweisen. Bei den Alkylenoxid-Einheiten sind Ethylenoxid-, Propylenoxid-und Butylenoxid-Einheiten, insbesondere Ethylenoxid-Einheiten bevorzugt. Die beschriebenen (Poly)alkylenoxidaddukte können aus gleichen oder aus verschiedenen Alkylenoxiden, beispielsweise aus blockartig oder statistisch angeordnetem Ethylenoxid und Propylenoxid aufgebaut sein, so daß die vorliegende Anmeldung auch derartige Misch-alkylenoxidaddukte umfaßt.

Außerdem können als Komponente c) auch nicht-tensidische Polymere enthalten sein, z.B. Polyvinylalkohole, Polyacrylate, Polymalinate oder Polyethylenoxide.

Die als Komponente c) enthaltenen Polymere können anorganisch (z.B. Silikate, Phosphate) oder organisch, kationisch, anionisch oder neutral, synthetisch oder natürlich vorkommend sein.

Außerdem können die erfindungsgemäßen flüssigen Formulierungen als Komponente d) von Komponente a) verschiedene organische Lösungsmittel wie unpolare Lösungsmittel, polare protische oder aprotisch dipolare Lösungsmittel und deren Mischungen enthalten. Beispiele für solche organischen Lösungsmittel d) sind
- aliphatische oder aromatische Kohlenwasserstoffe, z.B. Mineralöle, Paraffine oder Toluol, Xylole und Naphthalinderivate, insbesondere 1-Methylnaphthalin, 2-Methylnaphthalin, C₆-C₁₆-Aromatengemische wie die Solvesso®-Reihe (ESSO) z.B. mit den Typen Solvesso® 100 (Kp. 162-177 °C), Solvesso® 150 (Kp. 187-207 °C) und Solvesso® 200 (Kp. 219-282 °C) und C₆-C₂₀-Aliphaten, die linear oder cyclisch sein können, wie die Produkte der Shellsol®-Reihe, Typen T und K oder BP-n Paraffine,
- halogenierte aliphatische oder aromatische Kohlenwasserstoffe wie Methylenchlorid bzw. Chlorbenzol,
- Ester wie Triacetin (Essigsäuretriglycerid), Butyrolacton, Propylencarbonat, Triethylcitrat und Phthalsäure-(C₁-C₂₂)alkylester, speziell Phthalsäure-(C₁-C₈)alkylester, Maleinsäure-(C₁-C₁₃)alkylester,
- Lineare, verzweigte, gesättigte oder ungesättigte C₁-C₂₀ Alkohole wie Methanol, Ethanol, n- und iso-Propanol, n-, iso-, sec.- und tert.-Butanol, Tetrahydrofurfurylalkohol, sowie Pentanol, Hexanol, Heptanol
- Ether wie Diethylether, Tetrahydrofuran (THF), Dioxan, Alkylenglykolmonoalkyether und -dialkylether wie z.B. Propylenglykolmonomethylether, speziell Dowanol® PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethylcapryl/caprin-fettsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan, sowie
- Öle im allgemeinen, wie Mineralöle oder Öle auf pflanzlicher Basis wie Maiskeimöl, Leinsaatöl und Rapsöl.
Als Komponenten d) bevorzugte organische Lösungsmittel im Sinne der vorliegenden Erfindung sind Esteröle wie Rapsölmethylester und aliphatische oder aromatische Kohlenwasserstoffe, wie Solvesso®-Typen, z. B. Solvesso® 200, Solvesso® 150.

Die erfindungsgemäßen Flüssigformulierungen, können als Komponente e) von ALS-Inhibitoren verschiedene Agrochemikalien enthalten. Dies sind beispielsweise von ALS-Inhibitoren verschiedene Herbizide, z.B. aus der Gruppe der (Het-) Aryloxyphenoxypropionate wie Diclofop-methyl oder Quizalofop-ester, der Gruppe der Heteroaryloxyphenoxypropionate wie Fenoxaprop-Ethyl oder Clodinafoppropargyl oder aus der Gruppe der Alkylazine, oder auch Safener-Wirkstoffe, Düngemittel, Insektizide, Fungizide oder Akarizide.

Von ALS-Inhibitoren verschiedene Herbizide sind z.B. Herbizide aus der Gruppe der Carbamate, Thiocarbamate, Halogenacetanilide, substituierte Phenoxy-, Naphthoxy-und Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Derivate sowie S-(N-Aryl-N-alkylcarbamoylmethyl)-dithiophosphorsäureester. Bevorzugt sind dabei Phenoxyphenoxy- und Heteroaryloxyphenoxy-Herbizide, sowie Herbizide, die gemeinsam mit ALS-Hemmstoffen (Acetolactat-Synthetase-Hemmstoffe) zur Erweiterung des Wirkungsspektrums eingesetzt werden, z.B. Bentazon, Cyanazin, Atrazin, Dicamba, Diflufenican, oder Hydroxybenzonitrile wie Bromoxynil und loxynil und andere Blattherbizide.

Geeignete Herbizide, die in den erfindungsgemäßen Formulierungen als Komponente e) enthalten sein können, sind beispielsweise:
A) Herbizide vom Typ der Phenoxyphenoxy- und
   Heteroaryloxyphenoxycarbonsäure-Derivate, wie
   A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067), 2-(4-(2-Fluor-4-trifluormethylphenoxy)phenoxy)propionsäuremethylester (US-A 4,808,750), 2-(4-(2,4-Dichlorbenzyl)phenoxy)propionsäuremethylester (DE-A 24 17 487), 4-(4-(4-Trifluormethylphenoxy)phenoxy)pent-2-en-säureethylester, 2-(4-(4-Trifluormethylphenoxy)phenoxy)propionsäuremethylester (DE-A 24 33 067);
   A2) "Einkernige" Heteroaryloxyphenoxy-alkancarbonsäure-Derivate, z.B. 2-(4-(3,5-Dichlorpyridyl-2-oxy)phenoxy)propionsäureethylester (EP-A 0 002 925),
      2-(4-(3,5-Dichlorpyridyl-2-oxy)phenoxy)propionsäurepropargylester
      (EP-A 0 003 114),
      2-(4-(3-Chlor-5-trifluormethyl-2-pyridyloxy)phenoxy)propionsäure-methylester
      (EP-A 0 003 890),
      2-(4-(3-Chlor-5-trifluormethyl-2-pyridyloxy)phenoxy)propionsäureethylester
      (EP-A 0 003 890),
      2-(4-(5-Chlor-3-fluor-2-pyridyloxy)phenoxy)propionsäurepropargylester
      (EP-A 0 191 736),
      2-(4-(5-Trifluormethyl-2-pyridyloxy)phenoxy)propionsäurebutylester
      (Fluazifop-butyl);
   A3) "Zweikernige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10, 61 (1985)),
      2-(4-(6-Chlor-2-chinoxalyloxy)phenoxy)propionsäure-2-isopropylidenaminooxy-ethylester (Propaquizafop),
      2-(4-(6-Chlorbenzoxazol-2-yl-oxy)phenoxy)propionsäureethylester (Fenoxaprop-ethyl), dessen D(+) Isomer (Fenoxaprop-P-ethyl) und 2-(4-(6-Chlorbenzthiazol-2-yloxy)phenoxy)propionsäureethylester (DE-A 26 40 730),
      2-(4-(6-Chlorchinoxalyloxy)phenoxy)propionsäure-tetrahydro-2-furylmethylester (EP-A 0 323 727);
B) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
C) Thiocarbamate, z.B.
   S-Ethyl-N,N-dipropylthiocarbamat (EPTC),
   S-Ethyl-N,N-diisobutylthiocarbamat (Butylate);
D) Cyclohexandionoxime, z.B.
   3-(1-Allyloxyiminobutyl)-4-hydroxy-6,6-dimethyl-2-oxocyclohex-3-encarbon-säuremethylester, (Alloxydim),
   2-(1-Ethoxyiminobutyl)-5-(2-ethylthiopropyl)-3-hydroxy-cydohex-2-en-1-on (Sethoxydim),
   2-(1 -Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on,
   2-(1-(3-Chlorallyloxy)iminopropyl)-5-(2-ethylthiopropylr3-hydroxy-cyclohex-2-en-1-on (Clethodim),
   2-(1-Ethoxyiminobutyl)-3-hydroxy-5-(thian-3-yl)-cyclohex-2-enon (Cycloxydim),
   2-(1-Ethoxyiminopropyl)-5-(2,4,6-trimethylphenyl)-3-hydroxy-cyclohex-2-en-1-on (Tralkoxydim);
E) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634), 2-(2-Nitro-3-methylsulfonylbenzoyl)-4,4-dimethylcyclohexan-1,3-dion (WO 91/13548);
F) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
G) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (E) 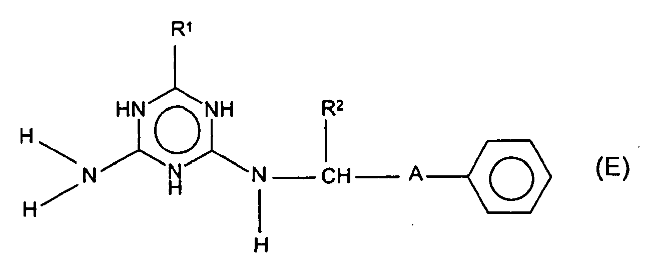 worin
   - R¹: (C₁-C₄)-Alkyl oder (C₁-C₄)-Haloalkyl;
   - R²: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂₋CH₂-O-, -CH₂-CH₂-CH₂-O-bedeuten, besonders bevorzugt solche der Formel E1-E7

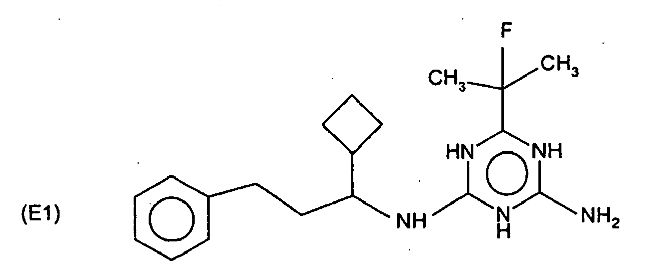

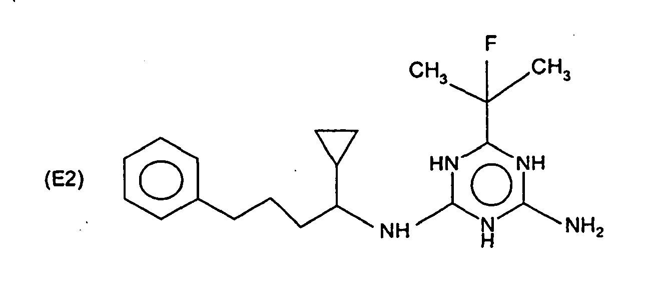

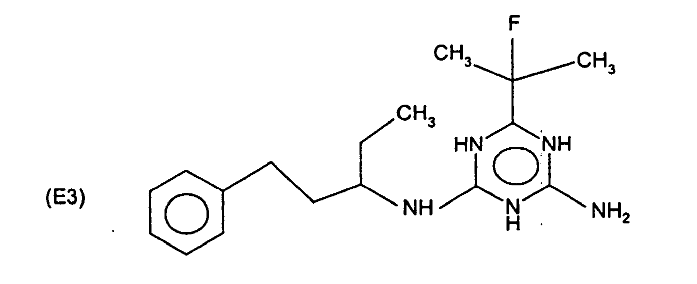

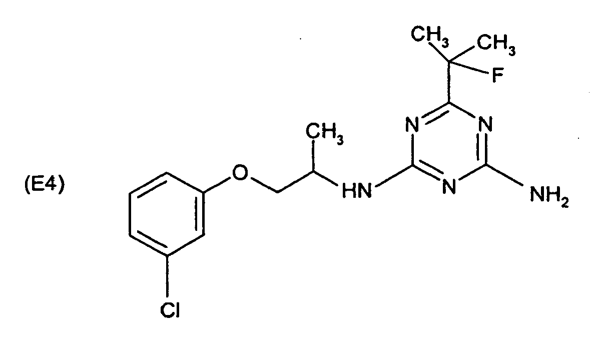

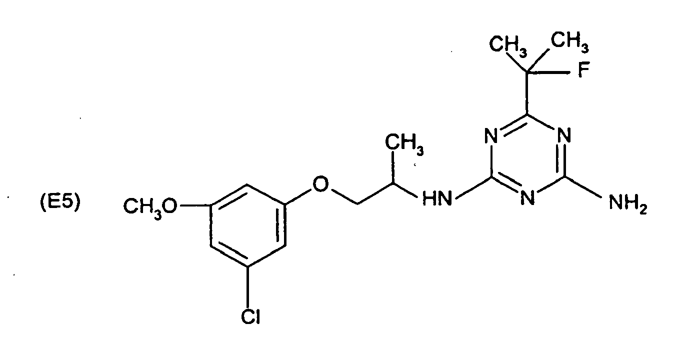

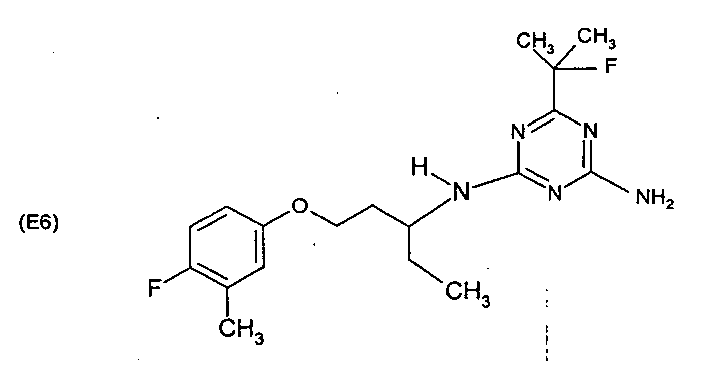

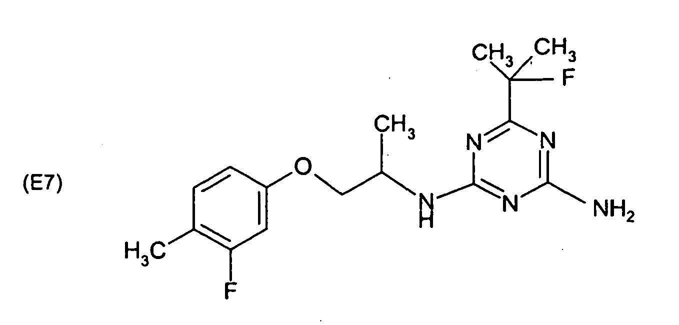

Die Herbizide der Gruppen A bis G sind beispielsweise aus den oben jeweils genannten Schriften und aus "The Pesticide Manual", The British Crop Protection Council, 12th Edition, 2000 (abgekürzt: PM), "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA, 1990, bekannt.

Die erfindungsgemäßen Formulierungen können als Komponente e) auch Safener enthalten, z.B. aus den folgenden Gruppen von Verbindungen:
a) Verbindungen vom Typ der Dichlorphenylpyrazolin-3-carbonsäure (S1), vorzugsweise Verbindungen wie
   1-(2,4-Dichlorphenyl)-5-(ethoxycarbonyl)-5-methyl-2-pyrazolin-3-carbonsäureethylester (S1-1), und verwandte Verbindungen (Mefenpyr-di(C₁-C₁₅-alkyl)ester wie Mefenpyr-diethyl), wie sie in der WO 91/07874 und PM S. 594 - 595 beschrieben sind,
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
c) Verbindungen vom Typ der Triazolcarbonsäuren (S1), vorzugsweise Verbindungen wie Fenchlorazol, d.h. 1-(2,4-Dichlorphenyl)-5-trichlormethyl-(1H)-1,2,4-triazol-3-carbonsäureethylester (S1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-3-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.
e) Verbindungen vom Typ der 8-Chinolinoxyessigsäure (S2), vorzugsweise (5-Chlor-8-chinolinoxy)-essigsäure-(1-methyl-hex-1-yl)-ester (S2-1, Cloquintocet-mexyl, z.B. PM (S. 195 - 196)), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
f) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
h) Wirkstoffe vom Typ der Pyrimidine, die als bodenwirksame Safener in Reis angewendet werden, wie z.B. "Fenclorim" (PM, S. 386-387) (= 4,6-Dichlor-2-phenylpyrimidin), das als Safener für Pretilachlor in gesätem Reis bekannt ist,
i) Wirkstoffe vom Typ der Dichloracetamide, die häufig als Vorauflaufsafener (bodenwirksame Safener) angewendet werden, wie z.B.
   "Dichlormid" (PM, S. 270-271) (= N,N-Diallyl-2,2-dichloracetamid),
   AR-29148" (= 3-Dichloracetyl-2,2,5-trimethyl-1,3-oxazolidon von der Firma Stauffer),
   "Benoxacor" (PM, S. 74-75) (= 4-Dichloracetyl-3,4-dihydro-3-methyl-2H-1,4-benzoxazin).
   APPG-1292" (= N-Allyl-N[(1,3-dioxolan-2-yl)-methyl]dichloracetamid von der Firma PPG Industries),
   ADK-24" (= N-Allyl-N-[(allylaminocarbonyl)-methyl]-dichloracetamid von der Firma Sagro-Chem),
   AAD-67" oder AMON 4660" (= 3-Dichloracetyl-1-oxa-3-aza-spiro[4,5]decan von der Firma Nitrokemia bzw. Monsanto),
   "Diclonon" oder ABAS145138" oder ALAB145138" (=(= 3-Dichloracetyl-2,5,5-trimethyl-1,3-diazabiclyco[4.3.0]nonan von der Firma BASF) und
   "Furilazol" oder AMON 13900" (siehe PM, 482-483) (= (RS)-3-Dichloracetyl-5-(2-furyl)-2,2-dimethyloxazolidon)
j) Wirkstoffe vom Typ der Dichloracetonderivate, wie z.B.
   AMG 191" (CAS-Reg. Nr. 96420-72-3) (= 2-Dichlormethyl-2-methyl-1,3-dioxolan von der Firma Nitrokemia), das als Safener für Mais bekannt ist,
k) Wirkstoffe vom Typ der Oxyimino-Verbindungen, die als Saatbeizmittel bekannt sind, wie z.B.
   "Oxabetrinil" (PM, S. 689) (= (Z)-1,3-Dioxolan-2-ylmethoxyimino(phenyl)acetonitril), das als Saatbeiz-Safener gegen Schäden von Metolachlor bekannt ist, "Fluxofenim" (PM, S. 467-468) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und "Cyometrinil" oder A-CGA-43089" (PM, S. 983) (= (Z)-Cyanomethoxyimino (phenyl)acetonitril), das als Saatbeiz-Safener gegen Schäden von Metolachlor bekannt ist,
l) Wirkstoffe vom Typ der Thiazolcarbonsäureester, die als Saatbeizmittel bekannt sind, wie z.B.
   "Flurazol" (PM, S. 450-451) (= 2-Chlor-4-trifluormethyl-1,3-thiazol-5-carbonsäurebenzylester), das als Saatbeiz-Safener gegen Schäden von Alachlor und Metolachlor bekannt ist,
m) Wirkstoffe vom Typ der Napthalindicarbonsäurederivate, die als Saatbeizmittel bekannt sind, wie z.B.
   "Naphthalic anhydrid" (PM, S. 1009-1010) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivatre, wie z.B.
   ACL 304415" (CAS-Reg. Nr. 31541-57-8) (= 2-84-Carboxy-chroman-4-yl)-essigsäure von der Firma American Cyanamid), das als Safener für Mais gegen Schäden von Imidazolinonen bekannt ist,
o) Wirkstoffe, die neben einer herbiziden Wirkung gegen Schadpflanzen auch Safenerwirkung an Kulturpflanzen wie Reis aufweisen, wie z.B.
   "Dimepiperate" oder AMY-93" (PM, S. 302-303) (= Piperidin-1-thiocarbonsäure-S-1-methyl-1-phenylethylester), das als Safener für Reis gegen Schäden des Herbizids Molinate bekannt ist,
   "Daimuron" oder ASK 23" (PM, S. 247) (= 1-(1-Methyl-1-phenylethyl)-3-p-tolyl-harnstoff), das als Safener für Reis gegen Schäden des Herbizids Imazosulfuron bekannt ist,
   "Cumyluron" = AJC-940" (= 3-(2-Chlorphenylmethyl)-1-(1-methyl-1-phenylethyl)-harnstoff, siehe JP-A-60087254), das als Safener für Reis gegen Schäden einiger Herbizide bekannt ist,
   "Methoxyphenon" oder ANK 049" (= 3,3'-Dimethyl-4-methoxy-benzophenon),das als Safener für Reis gegen Schäden einiger Herbizide bekannt ist,
   "CSB" (= 1-Brom-4-(chlormethylsulfonyl)-benzol) (CAS-Reg. Nr. 54091-06-4 von Kumiai).

Bevorzugte Safener sind Mefenpyr-diethyl, lsoxadifen-ethyl und Cloquintocet-mexyl.

In den erfindungsgemäßen flüssigen Formulierungen können als Komponente f) auch übliche Formulierungshilfsmittel wie Entschäumer, Frostschutzmittel, Verdunstungshemmer, Konservierungsmittel, Riechstoffe, Farbstoffe, Stabilisatoren, Wasserfänger oder Verdicker enthalten sein. Bevorzugte Formulierungshilfsmittel sind Frostschutzmittel und Verdunstungshemmer wie Glycerin, z.B. in einer Menge von 2 bis 10 Gew.-% und Konservierungsstoffe, z.B. Mergal® K9N (Riedel) oder Cobate® C.

Es können in den erfindungsgemäßen Formulierungen als Komponente g) auch Tankmisch-Komponenten enthalten sein. Beispiele hierfür sind Tankmisch-Adjuvantien wie Telmion® (Hoechst) oder Pflanzenöle wie Actirob B® (Novance) oder Hasten® (Victorian Chemicals), anorganische Verbindungen wie Düngemittel, z. B. Ammoniumsulfat, Ammoniumnitrat, Ammoniumhydrogensulfat, Harnstoffe oder Hydrotropika.

Als Komponente h) kann in den erfindungsgemäßen Formulierungen auch zusätzliches Wasser enthalten sein.

Die erfindungsgemäßen flüssigen Formulierungen können z.B. in Form von Lösungen, emulgierbare Konzentrate, oder Dispersionen wie Emulsionen oder Suspensionen vorliegen. Dabei liegt bevorzugt zumindest ein Wirkstoff aus der Gruppe der Sulfonylharnstoffe in gelöster Form vor. In einer weiteren bevorzugten Ausführungsform liegen alle enthaltenen Wirkstoffe in Lösung vor.

Aus erfindungsgemäßen Lösungen enthaltend Komponenten a) und b) und gegebenenfalls Komponenten c), d), e), f) und g) können durch Zugabe von Wasser Mikroemulsionen und/oder Makroemulsionen bzw. Lösungen erhalten werden. Somit umfaßt die vorliegende Erfindung neben Lösungen in Polycarbonsäurealkylestern a) und/oder in organischen Lösungsmitteln auch wasserhaltige Formulierungen wie Mikroemulsionen und Makroemulsionen (z. B. EW- und EO-Formulierungen).

Durch Einarbeitung von in der kontinuierlichen Phase unlöslichen Komponenten oder Wirkstoffen in die Formulierungen ergeben sich Dispersionen. Daher umfaßt die vorliegende Erfindung auch derartige Dispersionen. Erfindungsgemäße Formulierungen ergeben bei Verdünnung mit Wasser Dispersionen oder auch wasserhaltige Lösungen, die ebenfalls von der vorliegenden Erfindung umfaßt werden.

Der Wirkstoffgehalt der erfindungsgemäßen Formulierungen kann im allgemeinen zwischen 0,001 Gewichtsprozent und 60 Gewichtsprozent betragen, wobei im Einzelfall, insbesondere bei Verwendung mehrerer Wirkstoffe, auch höhere Beladungen möglich sind. Da ALS-Inhibitoren sehr effektive Wirkstoffe darstellen liegen die bevorzugten Aufwandmengen üblicherweise zwischen 1 und 1000 g, bevorzugt 500 g, vorzugsweise zwischen 1 und 100 g Aktivsubstanz/Hektar. Der Gehalt an erfindungsgemäßen Polycarbonsäurederivaten beträgt im allgemeinen 0,01 - 99,9%, vorzugsweise 0,1 - 99%, kann im Einzelfall allerdings auch höher oder niedriger liegen.

Bevorzugte Gewichtsverhältnisse den Komponenten a) und b) in den erfindungsgemäßen flüssigen Formulierungen, insbesondere emulgierbaren Konzentraten sind 0,1:1-1000:1, bevorzugt 1:1 bis 500:1, insbesondere 1:1 bis 200:1. Besonders bevorzugt ist ein Gewichtsüberschuß an Komponente a) gegenüber Komponente b), z.B. ca. 2:1, 3:1, 5:1, 6:1, 7:1, 10:1, 50:1, 100:1, 200:1, 300:1, 400:1 und 500:1.

Die zur Herstellung der erfindungsgemäßen Formulierungen verwendbaren Hilfs-und Zusatzstoffe wie z.B. Tenside und Lösungsmittel sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.lnc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4. Auflage 1986.

Die erfindungsgemäßen flüssigen Formulierungen lassen sich durch übliche bereits bekannte Verfahren herstellen, d.h. beispielsweise durch Vermischen der verschiedenen Komponenten mit Hilfe von Rührern, Schüttlern oder (statischen) Mischern. Dabei ist gegebenenfalls ein kurzzeitiges Erwärmen von Vorteil. Im Falle salzartiger Sulfonylharnstoffe eröffnet dieses einfache Verfahren die Möglichkeit, die entsprechenden Sulfonylharnstoffe-Salze in-situ herzustellen, indem man beispielsweise nichtionogene Tenside verwendet, vorzugsweise solche bei denen keine Neutralisation durchgeführt wurde.

Die vorliegende Erfindung umfaßt somit auch die zur Herstellung der erfindungsgemäßen flüssigen Formulierungen beschriebenen Verfahren. Diese zeichnen sich insbesondere durch produktionstechnische Vorteile aus.

In einer bevorzugten Ausführungsform werden Sulfonylharnstoffe mit Gegenionen verwendet, die Phasentransfereigenschaften aufweisen. Solche Gegenionen sind beispielsweise organische Gegenionen wie organische Ammonium-, Sulfonium- oder Phosphoniumionen. Derartige Gegenionen lassen sich besonders einfach in die Formulierungen einarbeiten, wenn sie als Beimischungen zu zusätzlichen beispielsweise nichtionogenen Formulierungskomponenten enthalten sind. Daher umfaßt die Erfindung auch die Einarbeitung der Gegenionen in die Formulierungen.

Die erfindungsgemäßen flüssigen Formulierungen enthalten vorzugsweise
(a) 0,01 bis 99,9 Gew.-%, vorzugsweise 0,1 bis 60 Gew.-% an Polycarbonsäurealkylestern der Formel(I),
(b) 0,001 bis 50 Gew.-%, vorzugsweise 0,1 bis 15 Gew.-% herbizider Wirkstoffe aus der Gruppe der Sulfonylharnstoffe und/oder deren Salze,
(c) 0 bis 60 Gew.-%, vorzugsweise 0,1 bis 50 Gew.-% Tenside und/oder nicht-tensidische Polymere,
(d) 0 bis 90 Gew.-%, vorzugsweise 1 bis 30 Gew.-% von Komponente a) verschiedene organische Lösungsmittel,
(e) 0 bis 50 Gew.-%, vorzugsweise 0 bis 30 Gew.-% von ALS-Inhibitoren verschiedene Agrochemikalien,
(f) 0 bis 20 Gew.-%, vorzugsweise 0 bis 10 Gew.-% üblicher Formulierungshilfsmittel, und
(h) 0 bis 50 Gew.-%, vorzugsweise 0 bis 10 Gew.-% zusätzliches Wasser.

Besonders bevorzugte flüssige Formulierungen enthalten:
a) 0,01 - 99 Gew.-% Dicarbonsäuredialkylester, z.B. der Struktur: (C₁-C₆)Alkyl-O-OC-(CH₂)₀₋₁₀-CO-O-(C₁-C₆)Alkyl
b) 0,001 - 30 Gew.-% Sulfonylharnstoffe und/oder deren Salze,
c1) optional 0,5 - 40 Gew.-% nichtionische-Tenside, z.B. solche der Formel

   R-(EO)_{X}(PO)_{Y}(EO)_{Z}-R'

   worin
   R H oder ein C₁-C₃₀-Kohlenwasserstoffoxyrest, wie di- oder tri-styrylphenol, mono-, di- oder tri-(C₁-C₁₀)alkyl-Aryloxy oder (C₁-C₂₀)alkyl-(poly)alkenyloxy ist, bevorzugt (C₈-C₁₈)-Alkyloxy oder mono-, di- oder tri-(C₁-C₁₀)alkylphenyloxy und
   R' H, COH, CO-(C₁-C₆)Alkyl, CO(C₁-C₆)Alkoxy oder (C₁-C₆)Alkyl ist, und x, y und z sind ganze Zahlen von 0 bis 200, wobei 4 ≤ x + y + z ≤ 200, bevorzugt 6 ≤ x + y + z ≤ 100 ist, besonders bevorzugt ist x eine ganze Zahl von 6 bis 200, vorzugsweise 8 bis 100, und y=z=0, und
c2) optional 0,5 - 60 Gew.-% Sulfosuccinate der Formel (IIIa):

   R^{III}O₂C-CH₂-CH(SO₃M)-CO₂R^{IV} (IIIa)

   worin
   R^{III} und R^{IV} gleich oder verschieden (C₁-C₁₀)Alkyl, wie 2-Ethylhexyl sind und
   M ein Metallkation, z.B. ein Alkalimetallion wie Na oder K ist. Auch diese besonders bevorzugten Kombinationen können selbst Formulierungen darstellen oder aber die Basis für eine Fertigformulierung darstellen.

Durch Verwendung der erfindungsgemäßen Formulierungen können lagerstabile Lösungen von Sulfonylharnstoffen und/oder deren Salzen, wie auch flüssige Formulierungen, in denen mindestens ein Sulfonylharnstoff und/oder dessen Salz gelöst ist, erhalten werden.

Löst man einen Sulfonylharnstoff und/oder ein davon abgeleitetes Salz in Komponente a), so können durch Zugabe von Tensiden und gegebenenfalls weiteren Hilfsstoffen entsprechende flüssige Formulierungen erhalten werden.

Die erfindungsgemäßen flüssigen Formulierungen können z.B. zur Bekämpfung von unerwünschtem Pflanzenwuchs, z.B. in Pflanzenkulturen verwendet werden. Hierzu wird eine wirksame Menge der erfindungsgemäßen Formulierung, falls erforderlich nach Verdünnen mit Wasser, auf die Samen, Pflanzen, Pflanzenteile oder die zu behandelnde Fläche, z.B. die Anbaufläche appliziert.

Die erfindungsgemäßen Formulierungen stellen physikalisch und chemisch stabile Formulierungen dar, welche bei Verdünnung mit Wasser Spritzbrühen mit physikalisch-anwendungstechnisch günstigen Eigenschaften ergeben. Darüber hinaus weisen die erfindungsgemäßen Formulierungen günstige biologische Eigenschaften auf und sind breit einsetzbar, z. B. zur Bekämpfung von unerwünschtem Pflanzenwuchs.

### Beispiele:

### Beispiel 1

1,1g lodosulfuron-methyl-Natrium wird in 98,9g Adipinsäuredimethylester gegeben, es wird solange gerührt bis der gesamte Wirkstoff gelöst ist. Die Formulierung war bei 40°C über 2 Monate lagerstabil.

### Beispiel 2

1,05g Mesosulfuron-methyl wird in 98,95g Adipinsäuredimethylester gegeben, es wird solange gerührt bis der gesamte Wirkstoff gelöst ist. Die Formulierung war bei 40°C über 2 Monate lagerstabil.

### Beispiel 3

1,05g lodosulfuron-methyl-Natrium wird unter Rühren in 88,95 Adipinsäuredimethylester gelöst. Nachdem Mesosulfuron-methyl gelöst ist, wird 10g Genapol® X-060 Methylether hinzugefügt. Es wird solange gerührt, bis die Formulierung klar ist. Die Formulierung war bei 40°C über 2 Monate lagerstabil.

### Beispiel 4

5,38g lodosulfuron-methyl-Natrium, 10g Hostapur® SAS 93 G und 84,62g Adipinsäuredimethylester werden mit einem Ultraturax homogenisiert. Anschließend gibt man Glasperlen zu der Mischung und mahlt in einer Perlmühle solange bis man eine homogene Dispersion erhält. Die Formulierung war bei 40°C über 2 Monate lagerstabil.

### Beispiel 5

1,54 g lodosulfuron-methyl-Natrium, 4,46 g Mefenpyr-diethyl und 8,02 g 2-(1-cyclobutyl-4-phenylpropyl)amino-4-amino-6-(1-fluoro-1-methylethyl)-1,3,5-triazin (E1) werden in 58,46 g Adipinsäuredimethylester, 15,00 g Triton® GR-7M E und 3,0 g Edenor® ME SU gegeben. Es wird solange gerührt bis der gesamte Wirkstoff gelöst ist. Anschließend wird 9,52 g Genapol® X-060 Methylether hinzugefügt. Es wird solange gerührt bis die Formulierung klar ist. Die Formulierung war bei 40°C über 2 Monate lagerstabil.

## Patentansprüche

1. Flüssige Formulierung enthaltend
a) eine oder mehrere Verbindungen der Formel (I)
R^{γ}-O-OC-(CR^{α}R^{β})ₓ-CO-O-R^{δ} (I)
worin
R^{α} und R^{β} gleich oder verschieden H, ein unsubstituierter oder substituierter C₁-C₂₀-Kohlenwasserstoffrest wie C₁-C₁₀-Alkyl oder eine Gruppe (CR'R")_{y}-CO-OR"' sind, worin R' und R" gleich oder verschieden H oder ein unsubstituierter oder substituierter C₁-C₂₀-Kohlenwasserstoffrest wie C₁-C₁₀-Alkyl sind, y eine ganze Zahl von 0 bis 10 ist und R"' ein unsubstituierter oder substituierter C₁-C₂₀-Kohlenwasserstoffrest wie C₁-C₁₀ Alkyl ist,
R^{γ} und R^{δ} gleich oder verschieden ein unsubstituierter oder substituierter C₁-C₂₀-Kohienwasserstoffrest wie C₁-C₁₀ Alkyl ist, und x eine ganze Zahl von 0 bis 20 ist, und
b) einen oder mehrere agrochemische Wirkstoffe aus der Gruppe der Sulfonylharnstoffe und/oder deren Salze, wobei zumindest einer der Wirkstoffe in gelöster Form vorliegt, ausgenommen emulgierbare Konzentrate, bestehend aus
A) einem oder mehreren Sulfonylharnstoffen der allgemeinen Formel (I) und/oder deren Salzen 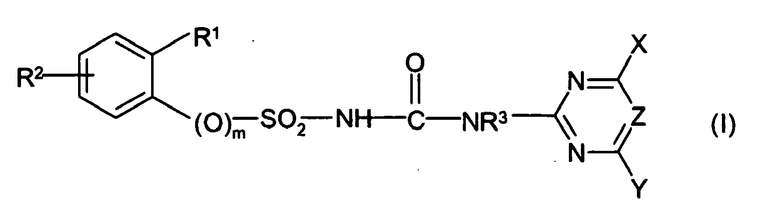 worin
R¹ C₂-C₄-Alkoxy oder CO-R^{a} ist, worin R^{a} gleich OH, C₁-C₆-Alkoxy oder NR^{b}R^{c} ist, worin R^{b} und R^{c} unabhängig voneinander gleich oder verschieden H oder C₁-C₆-Alkyl sind,
R² Halogen oder (A)ₙ-NR^{d}R^{e} ist, worin n gleich Null oder 1 ist, A eine Gruppe CR^{f}R^{g} ist, worin R^{f} und R^{g} unabhängig voneinander gleich oder verschieden H oder C₁-C₆-Alkyl sind, R^{d} gleich H oder C₁-C₆-Alkyl ist und R^{e} H, C₁-C₆-Alkyl oder ein Acyl-Rest ist, wobei R^{d} und R^{e} auch einen heterocyclischen Ring bilden können, und für den Fall, daß R¹ gleich C₂-C₄-Alkoxy ist, R² auch H sein kann,
R³ H oder C₁-C₆-Alkyl ist,
m gleich Null oder 1 ist,
X und Y unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
Z gleich CH oder N ist,
B) einem oder mehreren Tensiden, enthaltend als Strukturelement mindestens 10 Alkylenoxideinheiten,
C) Malonsäuredimethylester, Bemsteinsäuredimethylester, Glutarsäurediemethylester oder Adipinsäuredimethylester, und
D) einem oder mehreren von Tensid B) verschiedene Tensiden ionischer und/oder nichtionischer Art.

2. Flüssige Formulierung gemäß Anspruch 1, enthaltend als Komponente b) ein oder mehrere Wirkstoffe aus der Gruppe der Sulfonylharnstoffe in Kombination mit einem oder mehreren von ALS-Inhibitoren verschiedenen Agrochemikalien.

3. Flüssige Formulierung, nach Anspruch 1 oder 2 enthaltend
(a) ein oder mehrere Verbindungen aus der Gruppe der Alkylester von Polycarbonsäuren der Formel (I),
(b) einen oder mehrere Wirkstoffe aus der Gruppe der Sulfonylharnstoffe und/oder deren Salze, sowie ein oder mehrere weitere Komponenten ausgewählt aus der Gruppe bestehend aus
(c) Tensiden und/oder nicht-tensidischen Polymeren,
(d) von Komponente a) verschiedene organische Lösungsmittel,
(e) von ALS-Inhibitoren verschiedene Agrochemikalien,
(f) übliche Formulierungshilfsmittel,
(g) Tankmischkomponenten, und/oder
(h) Wasser.

4. Flüssige Formulierung nach einem der Ansprüche 1 bis 3, enthaltend
(a) 0,1 bis 80 Gew.-% einer oder mehrerer Verbindungen aus der Gruppe der Alkylester von Polycarbonsäuren der Formel (I),
(b) 0,001 bis 50 Gew.-% eines oder mehrerer Wirkstoffe aus der Gruppe der Sulfonylharnstoffe und/oder deren Salze,
(c) 0 bis 60 Gew.-% Tenside und/oder nicht-tensidische Polymere,
(d) 0 bis 90 Gew.-% von Komponente a) verschiedene organische Lösungsmittel,
(e) 0 bis 50 Gew.-% von ALS-Inhibitoren verschiedenen Agrochemikalien,
(f) 0 bis 20 Gew.-% übliche Formulierungshilfsmittel und/oder
(g) 0 bis 50 Gew.-% Wasser.

5. Flüssige Formulierung nach einem der Ansprüche 1 bis 4, enthaltend
(a) 10 bis 60 Gew.-% einer oder mehrerer Verbindungen aus der Gruppe der Alkylester von Polycarbonsäuren der Formel(I)
(b) 1 bis 15 Gew.-% eines oder mehrerer Wirkstoffe aus der Gruppe der Sulfonylharnstoffe, und/oder deren Salze,
(c) 0 bis 50 Gew.-% Tenside und/oder nicht-tensidische Polymere,
(d) 0 bis 30 Gew.-% von Komponente a) verschiedene organische Lösungsmittel,
(e) 0 bis 50 Gew.-% von ALS-Inhibitoren verschiedene Agrochemikalien und/oder
(f) 0 bis 10 Gew.-% übliche Formulierungshilfsmittel.

6. Flüssige Formulierung nach einem der Ansprüche 1 bis 5 in Form einer Lösung, einer Dispersion oder eines Emulsionskonzentrats.

7. Verfahren zur Herstellung einer gemäß einem der Ansprüche 1 bis 6 definierten flüssigen Formulierung, **dadurch gekennzeichnet, daß** man die Komponenten miteinander vermischt.

8. Verfahren gemäß Anspruch 7, **dadurch gekennzeichnet, daß** man die Komponenten nach dem Vermischen vermahlt.

9. Verfahren zur Bekämpfung von unerwünschtem Pflanzenwuchs, **dadurch gekennzeichnet, daß** man eine wirksame Menge einer Formulierung gemäß einem oder mehreren der Ansprüche 1 bis 6, auf die Samen, Pflanzen, Pflanzenteile oder die zu behandelnde Fläche appliziert.

## Claims

1. A liquid formulation, comprising
a) one or more compounds of the formula (I)
R^{Y}-O-OC-(CR^{α}R^{β})ₓ-CO-O-R^{δ} (I)
in which
R^{α} and R^{β} are identical or different and are H, an unsubstituted or substituted C₁-C₂₀-hydrocarbon radical, such as C₁-C₁₀-alkyl, or a group (CR'R")_{y}-CO-OR"', in which R' and R" are identical or different and are H or an unsubstituted or substituted C₁-C₂₀-hydrocarbon radical, such as C₁-C₁₀-alkyl, y is an integer from 0 to 10 and R"' is an unsubstituted or substituted C₁-C₂₀-hydrocarbon radical, such as C₁-C₁₀ alkyl,
R^{γ} and R^{δ} are identical or different and are an unsubstituted or substituted C₁-C₂₀-hydrocarbon radical, such as C₁-C₁₀ alkyl, and x is an integer from 0 to 20, and
b) one or more agrochemically active compounds from the group of the sulfonylureas and/or salts thereof, where at least one of the active compounds is present in dissolved form, except for emulsifiable concentrates, consisting of
A) one or more sulfonylureas of the general formula (I) and/or salts thereof 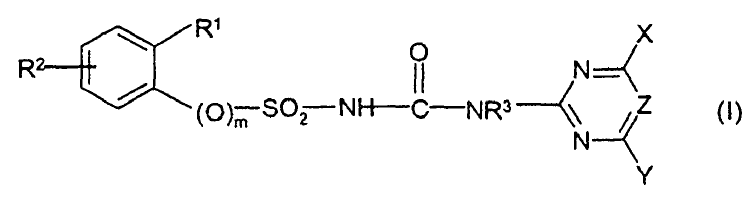 in which
R¹ is C₂-C₄-alkoxy or CO-R^{a}, where R^{a} is OH, C₁-C₆-alkoxy or NR^{b}R^{c}, where R^{b} and R^{c} independently of one another are identical or different and are H or C₁-C₆-alkyl,
R² is halogen or (A)ₙ-NR^{d}R^{e}, where n is zero or 1, A is a group CR^{f}R^{g}, where R^{f} and R^{g} independently of one another are identical or different and are H or C₁-C₆-alkyl, R^{d} is H or C₁-C₆-alkyl and R^{e} is H, C₁-C₆-alkyl or an acyl radical, where R^{d} and R^{e} may also form a heterocyclic ring and where, if R¹ is C₂-C₄-alkoxy, R² may also be H,
R³ is H or C₁-C₆-alkyl,
m is zero or 1,
X and Y independently of one another are identical or different and are C₁-C₆-alkyl, C₁-C₆-alkoxy or C₁-C₆-alkylthio, where each of the three radicals mentioned is unsubstituted or substituted by one or more radicals from the group consisting of halogen, C₁-C₄-alkoxy and C₁-C₄-alkylthio, or are C₃-C₆-cycloalkyl, C₂-C₆-alkenyl, C₂-C₆-alkynyl, C₃-C₆-alkenyloxy or C₃-C₆-alkynyloxy, preferably C₁-C₄-alkyl or C₁-C₄-alkoxy,
Z is CH or N,
B) one or more surfactants comprising as structural element at least 10 alkylene oxide units,
C) dimethyl malonate, dimethyl succinate, dimethyl glutarate or dimethyl adipate, and
D) one or more surfactants of ionic and/or nonionic nature different from surfactant B).

2. The liquid formulation as claimed in claim 1, which comprises, as component b), one or more active compounds from the group of the sulfonylureas in combination with one or more agrochemicals which are different from ALS inhibitors.

3. The liquid formulation as claimed in claim 1 or 2, comprising
(a) one or more compounds from the group of the alkyl esters of polycarboxylic acids of the formula (I),
(b) one or more active compounds from the group of the sulfonylureas and/or their salts, and also one or more further components selected from the group consisting of
(c) surfactants and/or non-surfactant polymers,
(d) organic solvents different from component a),
(e) agrochemicals different from ALS inhibitors,
(f) customary formulation auxiliaries,
(g) tank mix components, and/or
(h) water.

4. The liquid formulation as claimed in any of claims 1 to 3, comprising
(a) from 0.1 to 80% by weight of one or more compounds from the group of the alkyl esters of polycarboxylic acids of the formula (I),
(b) from 0.001 to 50% by weight of one or more active compounds from the group of the sulfonylureas and/or salts thereof,
(c) from 0 to 60% by weight of surfactants and/or non-surfactant polymers,
(d) from 0 to 90% by weight of organic solvents different from component a),
(e) from 0 to 50% by weight of agrochemicals different from ALS inhibitors,
(f) from 0 to 20% by weight of customary formulation auxiliaries and/or
(g) from 0 to 50% by weight of water.

5. The liquid formulation as claimed in any of claims 1 to 4, comprising
(a) from 10 to 60% by weight of one or more compounds from the group of the alkyl esters of polycarboxylic acids of the formula (I),
(b) from 1 to 15% by weight of one or more active compounds from the group of the sulfonylureas and/or salts thereof,
(c) from 0 to 50% by weight of surfactants and/or non-surfactant polymers,
(d) from 0 to 30% by weight of organic solvents different from component a),
(e) from 0 to 50% by weight of agrochemicals different from ALS inhibitors and/or
(f) from 0 to 10% by weight of customary formulation auxiliaries.

6. The liquid formulation as claimed in any of claims 1 to 5 in the form of a solution, a dispersion or an emulsion concentrate.

7. A process for preparing a liquid formulation as defined in any of claims 1 to 6, which comprises mixing the components with one another.

8. The process as claimed in claim 7, wherein the components are ground after mixing.

9. A method for controlling undesirable vegetation, which comprises applying an effective amount of a formulation as claimed in one or more of claims 1 to 6 to the seeds, plants, parts of plants, or the area to be treated.

## Revendications

1. Formulation liquide comprenant :
a) un ou plusieurs composés de formule (I)
R^{γ}-O-OC-(CR^{α}R^{β})ₓ-CO-O-R^{δ} (I)
dans laquelle :
R^{α} et R^{β} sont identiques ou différents et représentent H, un radical hydrocarboné en C₁-C₂₀ non substitué ou substitué comme par un groupe alkyle en C₁-C₁₀ ou un groupe (CR'R")y-CO-OR"', dans lequel R' et R" sont identiques ou différents et représentent H ou un radical hydrocarboné en C₁-C₂₀, non substitué ou substitué comme par un groupe alkyle en C₁-C₁₀, y est un entier de 0 à 10 et R"' est un radical hydrocarboné en C₁-C₂₀ non substitué ou substitué comme par un groupe alkyle en C₁-C₁₀, R^{γ} et R^{δ} sont identiques ou différents et représentent un radical hydrocarboné en C₁-C₂₀ non substitué ou substitué comme par un groupe alkyle en C₁-C₁₀, et x est un entier de 0 à 20, et
b) une ou plusieurs substances actives agrochimiques du groupe des sulfonylurées et/ou des sels de celles-ci, au moins une des substances actives se présentant sous forme dissoute, à l'exception de concentrés émulsionnables, étant constituée par
A) une ou plusieurs sulfonylurées de formule générale (I) et/ou des sels de celles-ci : 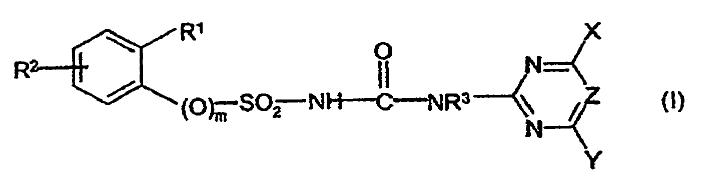 dans laquelle :
R¹ est un groupe alcoxy en C₂-C₄ ou CO-R^{a}, R^{a} étant OH, un groupe alcoxy en C₁-C₆ ou NR^{b}R^{c}, R^{b} et R^{c}, indépendamment l'un de l'autre sont identiques ou différents et représentent H ou un groupe alkyle en C₁-C₆,
R² est un halogène ou (A)n-NR^{d}R^{e}, dans lequel n vaut 0 ou 1, A est un groupe CR^{f}R^{g}, R^{f} et R^{g}, indépendamment l'un de l'autre sont identiques ou différents et représentent H ou un groupe alkyle en C₁-C₆, R^{d} est H ou un groupe alkyle en C₁-C₆ et Re est H, un groupe alkyle en C₁-C₆ ou un radical acyle, R^{d} et R^{e} pouvant également former un noyau hétérocyclique et dans le cas où R¹ est un groupe alcoxy en C₂-C₄, R² peut être également H,
R³ est H ou un groupe alkyle en C₁-C₆,
m vaut 0 ou 1,
X et Y, indépendamment l'un de l'autre sont identiques ou différents et représentent un groupe alkyle en C₁-C₆, un groupe alcoxy en C₁-C₆ ou un groupe alkylthio en C₁-C₆, chacun des trois radicaux mentionnés étant non substitué ou substitué par un ou plusieurs radicaux du groupe halogène, alcoxy en C₁-C₄ et alkylthio en C₁-C₄, ou sont un groupe cycloalkyle en C₃-C₆, un groupe alcényle en C₂-C₆, un groupe alcynyle en C₂-C₆, un groupe alcényloxy en C₃-C₆ ou un groupe alcynyloxy en C₃-C₆, de préférence un groupe alkyle en C₁-C₄ ou un groupe alcoxy en C₁-C₄,
Z est CH ou N,
B) un ou plusieurs tensioactifs, contenant comme élément structural au moins 10 motifs oxyde d'alkylène,
C) des esters diméthyliques de l'acide malonique, des esters diméthyliques de l'acide succinique, des esters diméthyliques de l'acide glutarique ou des esters diméthyliques de l'acide adipique, et
D) un ou plusieurs tensioactifs de nature ionique et/ou non ionique qui différent du tensioactif B).

2. Formulation liquide selon la revendication 1, comprenant en tant que composant b) une ou plusieurs substances actives du groupe des sulfonylurées combinées à un ou plusieurs produits agrochimiques qui diffèrent des inhibiteurs de l'ALS.

3. Formulation liquide selon la revendication 1 ou 2, comprenant:
(a) un ou plusieurs composés du groupe des esters alkyliques d'acides polycarboxyliques de formule (I),
(b) une ou plusieurs substances actives du groupe des sulfonylurées et/ou des sels de celles-ci, ainsi qu'un ou plusieurs autres composants choisis dans le groupe constitué par :
(c) des tensioactifs et/ou des polymères non tensioactifs,
(d) des solvants organiques qui diffèrent du composant a),
(e) des produits agrochimiques qui diffèrent des inhibiteurs de l'ALS,
(f) des auxiliaires de formulation habituels,
(g) des composants pour assurer le brassage dans les réservoirs, et/ou
(h) de l'eau.

4. Formulation liquide selon l'une des revendications 1 à 3, contenant :
(a) 0,1 à 80 % en poids d'un ou plusieurs composés du groupe des esters alkyliques d'acides polycarboxyliques de formule (I),
(b) 0,001 à 50 % en poids d'une ou plusieurs substances actives du groupe des sulfonylurées et/ou des sels de celles-ci,
(c) 0 à 60 % en poids de tensioactifs et/ou de polymères non tensioactifs,
(d) 0 à 90 % en poids de solvants organiques qui diffèrent du composant a),
(e) 0 à 50 % en poids de produits agrochimiques qui diffèrent des inhibiteurs de l'ALS,
(f) 0 à 20 % en poids d'auxiliaires de formulation habituels et/ou
(g) 0 à 50 % en poids d'eau.

5. Formulation liquide selon l'une des revendications 1 à 4, contenant :
(a) 10 à 60 % en poids d'un ou plusieurs composés du groupe des esters alkyliques d'acides polycarboxyliques de formule (I),
(b) 1 à 15 % en poids d'une ou plusieurs substances actives du groupe des sulfonylurées et/ou des sels de celles-ci,
(c) 0 à 50 % en poids de tensioactifs et/ou de polymères non tensioactifs,
(d) 0 à 30 % en poids de solvants organiques qui diffèrent du composant a),
(e) 0 à 50 % en poids de produits agrochimiques qui diffèrent des inhibiteurs de l'ALS et/ou
(f) 0 à 10 % en poids d'auxiliaires de formulation habituels.

6. Formulation liquide selon l'une des revendications 1 à 5 sous forme d'une solution, d'une dispersion ou d'un concentré émulsionnable.

7. Procédé pour la préparation d'une formulation liquide définie selon l'une des revendications 1 à 6, **caractérisé en ce qu'**on mélange les composants les uns aux autres.

8. Procédé selon la revendication 7, **caractérisé en ce qu'**on broie les composants après le mélange.

9. Procédé pour lutter contre la croissance indésirable des végétaux, **caractérisé en ce qu'**on applique une quantité efficace d'une formulation selon une ou plusieurs des revendications 1 à 6 sur les graines, les plantes, les parties végétales ou la surface à traiter.
